(19) Europäisches Patentamt
European Patent Office
Office européen des brevets

(11) **EP 2 864 264 B1**

(12) **EUROPÄISCHE PATENTSCHRIFT**

(45) Veröffentlichungstag und Bekanntmachung des Hinweises auf die Patenterteilung:
**07.08.2019 Patentblatt 2019/32**

(51) Int Cl.:
*C03C 3/087* *(2006.01)*   *C03C 3/097* *(2006.01)*
*C03C 4/02* *(2006.01)*   *C03C 10/00* *(2006.01)*
*F24C 15/10* *(2006.01)*

(21) Anmeldenummer: **13731140.3**

(22) Anmeldetag: **25.06.2013**

(86) Internationale Anmeldenummer:
**PCT/EP2013/063220**

(87) Internationale Veröffentlichungsnummer:
**WO 2014/001299 (03.01.2014 Gazette 2014/01)**

(54) **Verwendung von Eisenoxid und/oder Ceroxid als Entfärbmittel bei Lithium-Aluminosilikat-Glaskeramikartikeln**

Use of iron oxide and/or cerium oxide as decolourising agent for lithium aluminosilicate glass-ceramic articles

Utilisation d'oxyde de fer et/ou de cérium en tant qu'agent de décoloration pour des articles en vitrocéramique à base d'aluminosilicate de lithium

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.06.2012 DE 102012105572**

(43) Veröffentlichungstag der Anmeldung:
**29.04.2015 Patentblatt 2015/18**

(73) Patentinhaber: **SCHOTT AG**
**55122 Mainz (DE)**

(72) Erfinder:
• **GABEL, Falk**
**65388 Schlangenbad (DE)**
• **SIEBERS, Friedrich**
**55283 Nierstein (DE)**
• **SCHIFFNER, Ulrich**
**Mainz 55126 (DE)**
• **WEISS, Evelin**
**55131 Mainz (DE)**

(74) Vertreter: **Blumbach · Zinngrebe Patentanwälte PartG mbB**
**Alexandrastraße 5**
**65187 Wiesbaden (DE)**

(56) Entgegenhaltungen:
EP-A1- 2 709 961   WO-A1-2012/010278
DE-A1-102008 050 263   DE-A1-102010 032 113
US-A1- 2005 255 983   US-A1- 2007 129 231
US-A1- 2011 009 254   US-A1- 2011 256 409

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft allgemein die Verwendung von Eisenoxid und/oder Ceroxid als Entfärbmittel bei Lithium-Aluminosilikat-Glaskeramikartikeln, wie etwa von Glaskeramik-Platten für Kochfelder oder Kaminscheiben.

Glaskeramik-Platten kommen unter anderem als Kochfelder zum Einsatz. Die hierfür verwendete Glaskeramiken weisen typischerweise eine geringe bis verschwindende Temperaturausdehnung im Temperaturbereich zwischen Raumtemperatur und der Betriebstemperatur von bis zu 700 °C von üblicherweise kleiner 1,5 x $10^{-6}$/K auf. In einer Ausführungsform sind diese Glaskeramiken im Volumen transparent eingefärbt, um die unter dem Kochfeld angeordneten Komponenten des Herds zu verbergen. In einer zweiten Ausführungsform sind die Glaskeramiken transparent und die Durchsicht auf die technischen Komponenten unter der Glaskeramik kann durch blickdichte also lichtblockende Beschichtungen auf Unter- und/oder Oberseite verhindert werden. Diese transparente Ausführungsform der Glaskeramik findet auch für Kaminscheiben Anwendung.

Aus praktischen oder ästhetischen Gründen besteht auch ein Bedürfnis, leuchtende Anzeigeelemente durch die Glaskeramikplatte hindurch scheinen zu lassen. Hohe Transmission und geringe Farbverfälschung sind dabei wünschenswert. Bei der transparenten Ausführungsform soll die gute und unverfälschte Durchsicht z. B. auf eine farbige Unterseitenbeschichtung oder auf das Flammenbild im Kamin gewährleistet sein.

Die WO 2010/040443 A2 beschreibt eine transparente, eingefärbte Kochfläche mit verbesserter farbiger Anzeigefähigkeit, bestehend aus einer Glaskeramik mit Hochquarz-Mischkristallen als vorherrschender Kristallphase, wobei die Glaskeramik, bis auf unvermeidliche Spuren, frei von den chemischen Läutermitteln Arsenoxid und/oder Antimonoxid ist. Die Glaskeramik weist Transmissionswerte von größer als 0,1 % im Bereich des sichtbaren Lichtes im gesamten Wellenlängenbereich größer als 450 nm auf, wobei die Lichttransmission im Sichtbaren im Bereich von 0,8 - 2,5 % und im Infraroten bei 1600 nm im Bereich von 45 - 85 % liegt.

Um die Färbung zu erreichen werden Vanadinoxid, $V_2O_5$, sowie Eisenoxid als Farboxide hinzugegeben.

Vanadinoxid wirkt dabei sehr stark färbend. Entsprechend gering sind die zugesetzten Mengen. Damit geht einher, dass die Einstellung einer vorgesehenen Transmission kritisch ist, da geringe Abweichungen des Vanadium-Gehalts im Gemenge des Glases zu starken Änderungen im Farbeindruck der Glaskeramik bewirken. Dieses Problem verschärft sich noch weiter, wenn höhere Transmissionswerte im sichtbaren Spektralbereich erzielt werden sollen, da die Relativschwankungen des Vanadinoxidgehalts bei gegebener Unsicherheit in der Gemengedosierung dabei noch zunehmen.

Problematisch ist auch die Einstellung eines bestimmten Farboxid-Gehalts bei der Herstellung des Ausgangsglases in einem kontinuierlichen Schmelzprozess. Soll hier beispielsweise nun ein Glas für eine Glaskeramik mit höherer Transmission hergestellt werden, müsste der Farboxid-Gehalt reduziert werden. Dies ist jedoch nur in einem aufwändigen Umschmelzprozess möglich, bei der eine große Menge an nicht verwertbarem Glas produziert wird.

Es wäre daher wünschenswert, die Einstellung eines bestimmten Farbtons, beziehungsweise einer bestimmten Absorption der Glaskeramik im sichtbaren Spektralbereich zu vereinfachen.

Diese Aufgabe wird durch den Gegenstand des Anspruchs 1 gelöst. Vorteilhafte Ausgestaltungen und Weiterbildungen der Erfindung sind in den abhängigen Ansprüchen angegeben.

Demgemäß sieht die Erfindung eine Verwendung von Eisenoxid und/oder Ceroxid als Entfärbmittel bei der Herstellung eines Lithium-Aluminosilikat-Glaskeramikartikels gemäß Anspruch 1, insbesondere einer Lithium-Aluminosilikat-Glaskeramikplatte vor, beinhaltend die Schritte:

- Bereitstellen eines Gemenges für die Lithium-Aluminosilikat-Glaskeramik, wobei das Gemenge ein Färbemittel, insbesondere ein Farboxid aufweist, welches in der Glaskeramik Licht im sichtbaren Spektralbereich zwischen 450 und 750 Nanometern absorbiert,
- Einschmelzen des Gemenges und Herstellen eines Glas-Vorprodukts, und
- Keramisieren des Glas-Vorprodukts, um einen Glaskeramik-Artikel zu erhalten,
- wobei dem Gemenge vor oder während dem Schmelzen ein Entfärbemittel hinzugegeben wird, welches bei der Keramisierung die Absorption des Färbemittels in zumindest einem Teilintervall des sichtbaren Spektralbereichs reduziert, so dass insgesamt die Transmission des Glaskeramik-Artikels im sichtbaren Spektralbereich zwischen 450 und 750 Nanometern zumindest gleich bleibt, vorzugsweise angehoben wird.

In Abhängigkeit von einer zuvor festgelegten Transmission des Glaskeramik-Artikels wird der Anteil des Entfärbemittels in der Glaskeramik-Zusammensetzung bestimmt und die dem Anteil entsprechende Menge des Entfärbemittels zum Gemenge hinzugegeben.

Der Erfindung liegt dabei die Erkenntnis zugrunde, dass sich die Lichtabsorption von für Glaskeramiken geeigneten bzw. vorhandenen färbenden Stoffen während des Keramisierungsvorgangs abschwächen lässt, indem andere, als Entfärbemittel wirkende Stoffe hinzugegeben werden. Auf diese Weise kann nun ein Gemenge bereitet werden, welches zu Glaskeramik verarbeitet eine hohe Lichtabsorption im sichtbaren Spektralbereich, zwischen 450 und 750 Nanometer oder einen Teilbereich des sichtbaren Spektralbereichs aufweist und diese Lichtabsorption dann gezielt durch Zugabe des Entfärbers abgeschwächt werden, um die gewünschte Transmission zu erhalten. Insbesondere kann dann auch bei einem kontinuierlichen Schmelzprozess zur Herstellung des Ausgangsglases das Gemenge für Glaskeramiken mit verschiedenen Transmissionen im sichtbaren Spektralbereich beibehalten werden.

Gemäß einer Weiterbildung der Erfindung ist daher auch vorgesehen, dass nacheinander mehrere Glaskeramik-Artikel mit unterschiedlicher Transmission hergestellt werden, indem die Zugabe des Entfärbemittels variiert wird. Aufgrund der Beibehaltung der Gemengezusammensetzung kann das Ausgangsglas für das Glas-Vorprodukt insbesondere auch in einer Wanne in einem kontinuierlichen Schmelzprozess hergestellt werden. Dabei kann, da nur der Gehalt des Entfärbemittels variiert wird, auf ein aufwändiges Umschmelzen verzichtet werden.

Überraschend ist auch, dass das Verfahren fallweise auch durch Hinzugabe eines Entfärbemittels funktioniert, welches seinerseits ein im sichtbaren Spektralbereich durch Absorption färbender Stoff ist. Obwohl also gemäß dieser Weiterbildung an sich mehr färbende Stoffe im Glas vorhanden sind, wird in der Glaskeramik durch die Entfärbung während der Keramisierung insgesamt eine Abschwächung der Absorption erreicht.

Besonders geeignet als Entfärbemittel sind Metalloxide polyvalenter Metalle. Dabei kann ein einzelnes solches Metalloxid, oder auch verschiedene Metalloxide polyvalenter Metalle dem Gemenge hinzugegeben werden.

Als Färbemittel im bereitgestellten Gemenge eignen sich ebenfalls ein oder mehrere Metalloxide polyvalenter Metalle.

Für die Ausführungsform der im Volumen transparent eingefärbten Glaskeramik ist dabei Vanadinoxid, $V_2O_5$, besonders vorteilhaft als Färbemittel des Gemenges. Vanadinoxid ist polyvalent und kann durch Übergang zwischen verschiedenen Oxidationsstufen seine Färbewirkung stark variieren. Zudem ist die Färbewirkung sehr stark. Bereits ein Gehalt von 0,025 Gewichtsprozent führt gemäß einem Beispiel ohne eine erfindungsgemäße Entfärbung bei einer 4 Millimeter dicken Glaskeramikplatte im Allgemeinen zu einer Lichttransmission im sichtbaren Spektralbereich von nur noch 2% oder weniger.

Als Entfärbemittel, insbesondere auch für das Färbemittel Vanadinoxid haben sich Eisenoxid und/oder Ceroxid als sehr wirksam erwiesen. Gemäß der Erfindung ist daher Vanadinoxid als Färbemittel im Gemenge enthalten und Fe2O3 und/oder CeO2 wird als Entfärbemittel zur Einstellung einer gewünschten, beziehungsweise vorgegebenen Transmission vor oder während der Herstellung des Ausgangsglases, also insbesondere vor oder während des Schmelzens einschließlich des Läuterns hinzugegeben.

Gemäß der Erfindung wird ein Lithium-Aluminosilikat-Glaskeramikartikel hergestellt, welcher Vanadinoxid als färbenden Bestandteil, beziehungsweise Färbemittel zu mindestens 0,005, vorzugsweise mindestens 0,01, insbesondere vorzugsweise bis 0,05 Gewichtsprozent aufweist, wobei die Glaskeramik als weiteren Bestandteil Eisenoxid mit einem Anteil von mindestens 0,1 Gewichtsprozent enthält, wobei der Eisenoxidgehalt mindestens so groß oder größer als der Vanadingehalt ist, und

wobei die Lichttransmission im sichtbaren Spektralbereich der Glaskeramikplatte bei Beleuchtung senkrecht zur Oberfläche der Glaskeramikplatte mehr als 2,5 % beträgt. Bevorzugt wird dabei sogar eine Transmission von mindestens 5% eingestellt.

Ein entsprechender Effekt zeigt sich nicht nur bei der Zugabe von Eisenoxid, sondern auch bei Ceroxid. Demgemäß wird alternativ oder zusätzlich auch eine Zugabe von mindestens 0,1 Gewichtsprozend Ceroxid vorgesehen.

Als Transmission im Sinne der Erfindung wird die nach DIN 5033 gemessene Lichttransmission bezeichnet. Diese ist identisch mit dem Y-Wert gemäß dem CIE-Farbsystem, gemessen mit Normlicht C. Dieses Licht entspricht Weißlicht mit einer Farbtemperatur von 6800K und repräsentiert damit mittleres Tageslicht. Mit anderen Worten weist die Glaskeramik eine Y-Wert gemäß dem CIE-Farbsystem, gemessen mit Normlicht C in Durchstrahlung von mindestens Y=2,5%, vorzugsweise mindestens Y=5% auf.

Bevorzugt weist eine Glaskeramik, beziehungsweise das zur Herstellung der Glaskeramik bereitgestellte Gemenge folgende wesentlichen Komponenten in Gewichtsprozent auf Oxidbasis auf:

| | |
|---|---|
| $Li_2O$ | 3 - 5, |
| $Al_2O_3$ | 18 - 25, |
| $SiO_2$ | 55 - 75, |
| $TiO_2$ | 1 - 5. |

Wie in der DE 19939787 C2 und der WO 2010/040443 A2 erläutert wird, soll die Einfärbung durch $V_2O_5$ durch einen Redoxvorgang erfolgen. Im kristallisierbaren Ausgangsglas färbt das $V_2O_5$ noch relativ schwach und führt zu einem leicht grünlichen Farbton. Bei der Keramisierung findet der Redoxvorgang statt, das Vanadium wird reduziert und der Redoxpartner wird oxidiert. Als primärer Redoxpartner soll dabei das Läutermittel wirken, wie durch Mössbauer-Untersuchungen an Sb- und Sn-geläuterten Zusammensetzungen gezeigt worden ist. Beim Keramisieren wird ein Teil des Sb bzw. Sn oder auch As im Ausgangsglas in die höhere Oxidationsstufe $Sb^{5+}$, beziehungsweise $Sn^{4+}$ oder $As^{5+}$

überführt. Es wurde postuliert, dass das Vanadium in reduzierter Oxidationsstufe als $V^{4+}$ oder $V^{3+}$ in die Glaskeramik-kristalle eingebaut wird und dort durch Elektronen-Chargetransfer-Reaktionen intensiv färbt. Als weiterer Redoxpartner kann auch $TiO_2$ die Einfärbung durch Vanadiumoxid verstärken. Legt man diesen Mechanismus zugrunde, so kann angenommen werden, dass Eisenoxid oder Ceroxid in hinreichend großer Menge den Einbau des Vanadinoxids in den Glaskeramikkristall teilweise unterbindet, und/oder einer Reduktion des Vanadinoxids entgegenwirkt.

Als Glaskeramikkristall kommt die üblicherweise aus Hochquarz-Mischkristallen bestehende Hauptphase oder die Keim-kristalle aus $TiO_2$, $ZrO_2$, und falls vorhanden $SnO_2$ in Frage.

Für den der Erfindung zugrundeliegenden Entfärbemechanismus erweist es sich als günstig, entsprechend keine zu hohen Gehalte an Zinn- und Titanoxid vorzusehen. Demgemäß ist in Weiterbildung der Erfindung vorgesehen, dass die Glaskeramik einen Gehalt von Zinnoxid von weniger als 0,5 Gewichtsprozent, vorzugsweise einen Gehalt von Zinnoxid im Bereich von 0,15 bis 0,5 Gewichtsprozent, besonders bevorzugt im Bereich von 0,2 bis 0,45 Gewichtsprozent aufweist. Diese Zinnoxid-Gehalte erweisen sich dennoch als ausreichend, um auch ohne nennenswerte Mengen von Arsenoxid, $As_2O_3$ oder Antimomonoxid, $Sb_2O_3$ das Ausgangsglas der Glaskeramik zu läutern. Vorzugsweise beträgt der Gehalt von $As_2O_3$ und $Sb_2O_3$ zusammen weniger als 0,1 Gewichtsprozent, besonders bevorzugt ist die Glaskeramik technisch frei von diesen Läutermitteln. Diese sind also mit gängigen Verfahren zur Bestimmung der Gewichtsanteile dann nicht nachweisbar.

Die Läuterung mit Zinnoxid kann durch Chlorid- und/oder Sulfatverbindungen sowie durch eine Hochtemperaturläuterung oberhalb 1700 °C, bevorzugt oberhalb 1750 °C unterstützt werden. Zusätze von Fluor- oder Brom-Verbindungen zur Läuterung sind ungünstig wegen der korrosiven Wirkung der Dämpfe auf das Schmelzaggregat. Bevorzugt liegen daher die Gehalte in der Glaskeramik, etwa resultierend aus Gemengeverunreinigungen, unter 0,05 Gew.%. Besonders bevorzugt werden Gehalte von Fluor- oder Bromverbindungen von unter 0,01 Gew%.

Für den Titanoxid-Gehalt ist es entsprechend günstig, wenn dieser, wie auch bei der oben angegebenen Zusammensetzung nicht höher als 5 Gewichtsprozent liegt. Bevorzugt wird ein Gehalt von 2,5 bis 5 Gewichtsprozent. Ganz besonders bevorzugt wird ein Gehalt von höchstens 3,9 Gewichtsprozent. Mit diesem Gehalt wird gleichzeitig sichergestellt, dass eine hinreichende Keimbildung zur Keramisierung erfolgt, denn Titanoxid wirkt als Keimbildner.

Den Elementen Eisen und Cer ist gemeinsam, dass sie sich leicht zwischen verschiedenen Oxidationsstufen überführen lassen. Es wird vermutet, dass anstelle einer Reduktion des Vanadinoxids durch Zinnoxid und Titanoxid eine Reduktion des $Fe^{3+}$ und/oder $Ce^{4+}$ erfolgt, beziehungsweise, dass die Reduktion des Vanadinoxids mit der Re-duktion des $Fe^{3+}$ und/oder $Ce^{4+}$ konkurriert. Davon ausgehend ist es günstig, den Gesamtgehalt von Zinnoxid und Titanoxid gegenüber dem Gesamtgehalt von Eisenoxid und Ceroxid in ein Verhältnis zu setzen. So gilt gemäß der Erfindung für die Gehalte von Zinnoxid, Titanoxid, Eisenoxid und Ceroxid die Beziehung

$(M(SnO_2) + 0{,}1^* \ M(TiO_2)) \ / \ (M(Fe_2O_3) + M(CeO_2)) < 4$, vorzugsweise <3. Dabei bezeichnet M jeweils die Menge/den Anteil des in Klammern genannten Metalloxids in Gewichtsprozent.

Entsprechend einer bevorzugten Ausgestaltungsvariante der Erfindung kann es vorgesehen sein, dass die Summe der Gewichtsanteile von Eisenoxid und Ceroxid an dem Lithium-Aluminosilikat-Glaskeramikartikel zwischen einem Faktor von 5 bis zu einem Faktor von 20 größer ist als der Gewichtsanteil von Vanadinoxid. Ab einem Faktor von 5 kann eine nutzbare Entfärbung des Glaskeramik-Artikels erreicht werden. Durch eine geeignete Wahl des Faktors in dem Bereich zwischen 5 und 20 lässt sich die Transmission des Glaskeramik-Artikels in einem weiten Bereich einstellen. Über einem Faktor von 20 kann keine weitere relevante Transmissionssteigerung im sichtbaren Bereich mehr erreicht werden. Eine weitere Erhöhung des Eisenoxid- oder Cergehalts führt hingegen zu einer unerwünschten Reduzierung der Transmission im infraroten Bereich.

Die Erfindung ermöglicht es nun, dass gemäß einer Ausführungsform ein konstanter Vanadinoxid-Gehalt im Gemenge eingestellt werden kann und der gewünschte Farbton, beziehungsweise die gewünschte Transmission über den Eisenoxid-Gehalt eingestellt wird. Die Farbton-Änderung ist in Abhängigkeit von der Variation des Eisenoxid-Gehalts schwächer, als dies bei einer Variation des VanadinoxidGehalts der Fall ist. Damit kann ein gewünschter Farbton, beziehungsweise eine gewünschte Transmission sehr genau eingestellt werden. Entsprechend geringer sind auch herstellungsbedingte Schwankungen des Farbtons.

Chromoxid hat sich in Verbindung mit Vanadiumoxid als Färbemittel und Cer- oder Eisenoxid zur Entfärbung allerdings als nachteilig herausgestellt. Gemäß noch einer Weiterbildung der Erfindung ist daher vorgesehen, dass ein Gemenge verwendet wird, bei welchem der Gewichtsanteil an Chrom oder Chromoxid kleiner als 0,01%, vorzugsweise kleiner als 0,005%, ist. Chromoxid färbt zusätzlich und verfügt über eigene Absorptionsbanden. Die selektive Färbung macht es schwierig, einen glatten Transmissionsverlauf einzustellen und kann bestimmte Anzeigefarben selektiv schwächen. Weiterhin ist Chromoxid ein starker, aber prozesstechnisch schwer zu kontrollierender Keimbildner. So wird im Artikel "Ultrafine grained glass-ceramics obtained with Cr2O3-additions", B. Andrianasolo et al., J. Non-Cryst. Solids 126 (1990) 103-110 als Schlussfolgerung beschrieben, dass Chrom eine kritische Komponente zur Herstellung ultrafeiner Glaskeramik ist. Chrom, obwohl es nicht in den Keimbildnerkristall eingebaut wird, beeinflusst demnach bereits in kleinen Mengen die Keimbildung.

Gemäß noch einer Ausführungsform der Erfindung erfolgt die Herstellung eines transparent eingefärbten Glaskeramik-Artikels, wie insbesondere einer Glaskeramik-Platte, beinhaltend folgende Schritte:

- Herstellen eines Gemenges für LAS-Glaskeramiken, wobei das Gemenge Vanadinoxid zu mindestens 0,005, vorzugsweise mindestens 0,01, insbesondere vorzugsweise bis 0,05 Gewichtsprozent aufweist,
- Festlegen eines Transmissionswertes von 2,5% oder mehr im sichtbaren Spektralbereich, wobei der Transmissionswert höher liegt, als der Transmissionswert einer aus einem entsprechenden Vanadinoxid-haltigen Gemenge mit einem Eisenoxid- oder Ceroxid-Gehalt von weniger als 0,1 Gewichtsprozent hergestellten Glaskeramik,
- Zugeben von Eisenoxid und/oder Ceroxid in einer Menge, welche die Absorption des Vanadinoxids im sichtbaren Spektralbereich so weit aufhebt, dass der festgelegte Transmissionswert in der Glaskeramik erreicht wird,
- Schmelzen des Gemenges und
- Herstellen einer Glasplatte, sowie
- Keramisieren der Glasplatte, so dass ein Glaskeramik-Artikel erhalten wird.

Generell, nicht nur beschränkt auf diese Ausführungsform der Erfindung kann die Glasplatte vor oder während der Keramisierung dreidimensional verformt werden, so dass der Glaskeramik-Artikel nicht notwendigerweise plattenförmig oder durchgehend flach ist. Als Beispiel sei eine Glaskeramik-Platte für ein Kochfeld mit einer eingeformten Kuhle, die als Wok verwendet werden kann, genannt.

Die Erfindung wird nachfolgend anhand der beigeschlossenen Zeichnungen und mit Ausführungsbeispielen näher erläutert. Es zeigen:

Fig. 1 ein Glaskeramik-Kochfeld mit einer erfindungsgemäßen Glaskeramik-Platte,

Fig. 2 eine Variante des in Fig. 1 dargestellten Glaskeramik-Kochfelds,

Fig. 3 den spektralen Transmissionsgrad zweier Glaskeramiken als Funktion der Wellenlänge,

Fig. 4 den spektralen Transmissionsgrad der Ausgangsgläser der beiden Glaskeramiken,

Fig. 5 den spektralen Transmissionsgrad einer erfindungsgemäßen Glaskeramik vor und nach einem Hitzebelastungstest,

Fig. 6 Transmissionskurven einer mit Selen entfärbten Glaskeramik und einer Vergleichsprobe,

Fig. 7 Transmissionskurven einer mit Arsenoxid entfärbten Glaskeramik und einer Vergleichsprobe.

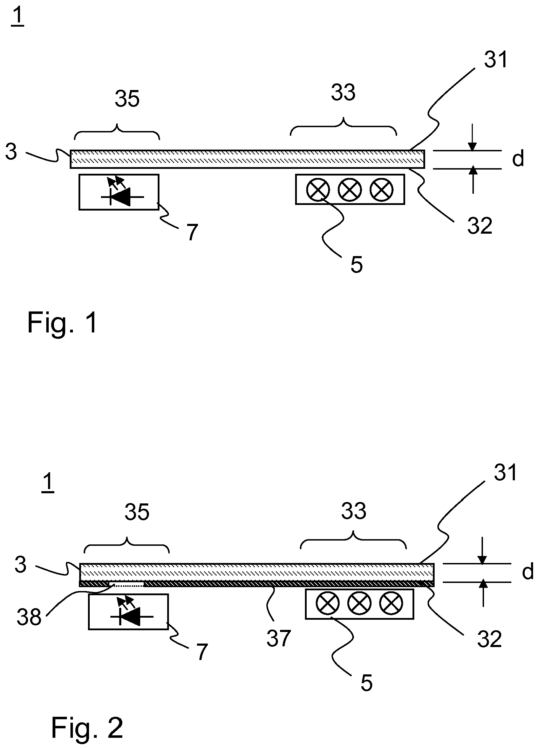

Das Verfahren eignet sich besonders für Glaskeramik-Kochfelder. Hierbei ist die Transmission der erfindungsgemäßen Glaskeramik so, dass eine sehr gute Sichtbarkeit und Farbwiedergabe für selbstleuchtende Anzeigeelemente erzielt wird. Fig. 1 zeigt dazu in seitlicher Ansicht ein schematisches Beispiel eines Glaskeramik-Kochfelds 1 mit einer erfindungsgemäßen Glaskeramikplatte 3. Die Glaskeramikplatte 3 weist eine Oberseite 31 und eine Unterseite 32 auf. Unter der Unterseite 32 sind Heizelemente 5 angeordnet, um gegenüberliegend auf der Oberseite 31 in einer Kochzone 33 aufgestelltes Kochgeschirr oder gegebenenfalls direkt die zu kochenden oder garenden Speisen zu erhitzen. Die Glaskeramikplatte 3 weist eine Dicke d auf, die typischerweise in einem Bereich von 2 bis 6 Millimetern liegt.

Allgemein, ohne Beschränkung auf das dargestellte Beispiel kann nun auch unter der Glaskeramikplatte 3 zumindest ein selbstleuchtendes und durch die Glaskeramikplatte 3 hindurchleuchtendes Anzeigeelement 7 angeordnet sein, Durch die erfindungsgemäß verbesserte Transmission der Glaskeramikplatte 3 transmittiert diese nun insbesondere nicht nur rotes Licht in nennenswerter Intensität. Vielmehr können auch gelbe, grüne und blaue Spektralbereiche dargestellt werden. Demgemäß ist in Weiterbildung der Erfindung vorgesehen, dass das selbstleuchtende Anzeigeelement 7 eingerichtet ist, Licht im sichtbaren Spektralbereich mit Wellenlängen kleiner als 570 Nanometern, vorzugsweise kleiner als 510 Nanometern zu emittieren. Geeignet als Anzeigeelement ist beispielsweise eine Leuchtdioden-Anzeige. Entsprechend der Transmission im gelben, grünen und blauen Spektralbereich können dann auch im gelben, grünen oder blauen Spektralbereich emittierende Anzeigeelemente verwendet werden, beispielsweise entsprechend gelb, grün oder blau, sowie auch weiß leuchtende LEDs. Ebenso kann das Anzeigelement aus einem Farbdisplay bestehen das eine Vielzahl von Anzeigen und Informationen für den Nutzer ermöglicht.

Das Anzeigeelement 7 kann beispielsweise wie dargestellt unter einem Anzeige- und/oder Bedienungsbereich 35 der Glaskeramikplatte 3 angeordnet sein. Auch eine Anordnung in der Kochzone 33 ist denkbar, beispielsweise, um optisch zu signalisieren, welche der Kochzonen gerade aktiv ist und heizt.

Durch die weiter unten noch genauer erläuterten Eigenschaften der Glaskeramik sind dabei auch gelbe, grüne oder blaue spektrale Anteile des vom Anzeigeelement 7 emittierten Lichts durch die Glaskeramikplatte 3 hindurch für einen Betrachter sichtbar.

Fig. 2 zeigt eine Variante der in Fig. 1 dargestellten Ausführungsform. Aufgrund der vergleichsweise hohen Transmission der erfindungsgemäßen Glaskeramik kann es gegebenenfalls wünschenswert sein, die Transmission im sichtbaren Spektralbereich wieder zu erniedrigen. Zu diesem Zweck ist gemäß einer in Fig. 2 beispielhaft dargestellten Weiterbildung der Erfindung eine zumindest teilweise lichtblockende Beschichtung 37 auf der Unterseite 32 der Glaskeramikplatte 3 vorgesehen.

Die lichtblockende Beschichtung 37 ist vorzugsweise hitzebeständig ausgebildet. Dies ist zumindest dann sinnvoll, wenn sich, wie auch in Fig. 2 dargestellt, die lichtblockende Beschichtung 37 entlang der Kochzone 33 erstreckt.

Als lichtblockende Beschichtung 37 kommt sowohl eine lichtabsorbierende, als auch eine lichtreflektierende Beschichtung in Frage. Die lichtblockende Beschichtung kann auch farblich ausgestaltet sein um eine gewünschte Differenzierung der Kochfläche zu erzielen. Die lichtblockende Beschichtung 37 dient dazu, dass die unter der Glaskeramikplatte 3 angeordneten Komponenten des Kochfelds für einen Betrachter unsichtbar bleiben. Um das Design und die Ästhetik zu verändern, kann die lichtblockende Beschichtung 37 auch farblich variiert werden oder gemustert sein. Als lichtblockende Beschichtung 37 kommen organische oder anorganische Farbschichten, wie beispielsweise Lacke oder Emailschichten in Frage. Ebenso können auch metallisch oder interferenzoptisch reflektierende Beschichtungen verwendet werden. Reflektierende oder absorbierende Beschichtungen können weiterhin auch aus Metallverbindungen, wie Oxiden, Carbiden, Nitriden oder Mischverbindungen aus Oxiden, Carbiden, Nitriden aufgebaut werden. Auch kann gegebenenfalls eine Halbleiterbeschichtung, wie etwa eine Siliziumschicht als lichtblockende Beschichtung 37 eingesetzt werden.

Um die Anzeigefähigkeit nicht zu beeinträchtigen, ist gemäß noch einer Weiterbildung der Erfindung vorgesehen, dass die lichtblockende Beschichtung zumindest eine Aussparung 38 aufweist, wobei das unter der Glaskeramikplatte 3 angeordnete, selbstleuchtende Anzeigeelement 7 durch die Aussparung 38 hindurchleuchtet.

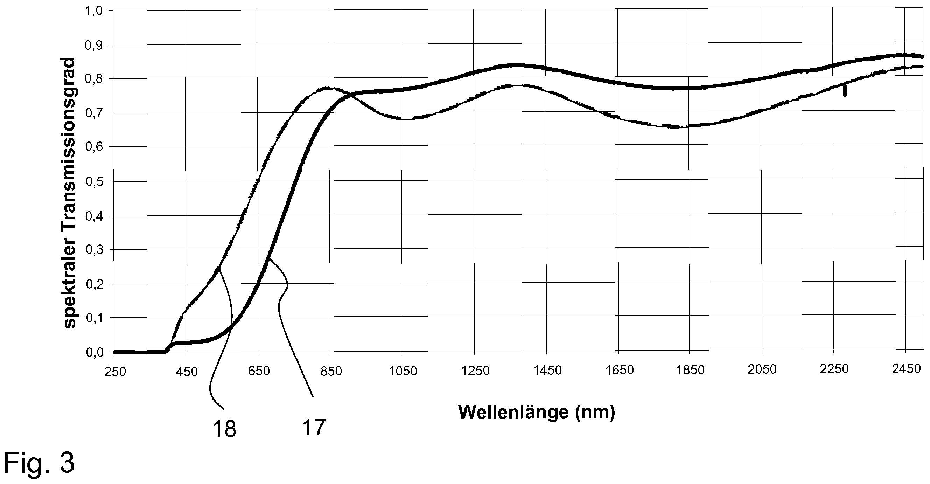

Fig. 3 zeigt nun zum Vergleich die spektralen Transmissionsverläufe 17, 18 zweier Glaskeramiken. Zur Messung wurden Glaskeramikplatten mit einer Dicke von 3 Millimetern verwendet, die senkrecht zur Oberfläche durchstrahlt wurden.

Der mit dem Bezugszeichen 17 bezeichnete Transmissionsverlauf wurde dabei an einer Glaskeramik mit niedrigem Eisenoxid-Gehalt gemessen. Der Transmissionsverlauf 18 hingegen wurde an einer Referenzglaskeramik gemessen, die einen $Fe_2O_3$-Gehalt von mehr als 0,1 Gewichtsprozent aufweist, der auch höher als der Vanadinoxid-Gehalt ist. Dabei ist der Vanadinoxid-Gehalt bei beiden Proben gleich.

Im Speziellen weisen beide Glaskeramiken zu den Transmissionsverläufen 17, 18 übereinstimmend folgende Zusammensetzung in Gewichtsprozent auf:

| | |
|---|---|
| $SiO_2$ | 65,14 |
| $Al_2O_3$ | 20,9 |
| $Li_2O$ | 3,71 |
| $Na_2O$ | 0,59 |
| $K_2O$ | 0,22 |
| $MgO$ | 0,37 |
| $ZnO$ | 1,5 |
| $CaO$ | 0,42 |
| $BaO$ | 2,3 |
| $TiO_2$ | 3,1 |
| $ZrO_2$ | 1,34 |
| $SnO_2$ | 0,24 |
| $V_2O_5$ | 0,026 |
| $MnO_2$ | 0,025 |

Die beiden Glaskeramiken unterscheiden sich nur im Gehalt an Eisenoxid als Entfärbemittel. Bei der Glaskeramik zu Transmissionsverlauf 17 beträgt der $Fe_2O_3$-Gehalt 0,093 Gewichtsprozent. Demgegenüber liegt der $Fe_2O_3$-Gehalt der Referenzglaskeramikplatte mit dem Transmissionsverlauf 18 bei 0,2 Gewichtsprozent. Der Gehalt ist damit, wie erfindungsgemäß vorgesehen, einerseits größer als 0,1 Gewichtsprozent und andererseits um einen Faktor 7,7 größer als der Gehalt von Vanadinoxid, $V_2O_5$. Auch der Gehalt an Titanoxid ist geringer als die bevorzugte Obergrenze von 3,9 Gewichtsprozent oder weniger. Weiterhin ist auch die weiter oben aufgeführte Bedingung $(M(SnO_2) + 0,1* M(TiO_2))$ / $(M(Fe_2O_3) + M(CeO_2)) < 3$ erfüllt. Das Verhältnis der Gewichtsanteile dieser Komponenten hat bei dieser Glaskeramik einen Wert von 2,75.

Bevorzugt haben die transparent eingefärbten Glaskeramiken eine Zusammensetzung die im Wesentlichen besteht aus den Komponenten in Gew.% auf Oxidbasis

| | |
|---|---|
| $Li_2O$ | 3,0 - 5,0 |
| $\sum Na_2O+K_2O$ | 0,2 - 1,5 |
| MgO | 0 - 2 |
| $\sum CaO+SrO+BaO$ | 0 - 4 |
| ZnO | 0 - 3 |
| $B_2O_3$ | 0 - 2 |
| $Al_2O_3$ | 18 - 25 |
| $SiO_2$ | 55 - 75 |
| $TiO_2$ | 1 - 5 |
| $ZrO_2$ | 0 - 2 |
| $P_2O_5$ | 0 - 3 |
| $SnO_2$ | 0,15 - 0,5 |
| $\sum TiO_2+ZrO_2+SnO_2$ | 3,8 - 6 |
| $V_2O_5$ | 0,005 - 0,05 |
| $Fe_2O_3+CeO_2$ | 0,1 - 0,6 |

Wie anhand des Diagramms der Fig. 3 ersichtlich ist, reduziert das Eisenoxid die Absorption des als Färbemittel verwendeten Vanadinoxids im sichtbaren Spektralbereich, insbesondere zwischen 750 und 450 Nanometern, so dass auch bei einem hohen Vanadinoxid-Gehalt von mehr als 0,02 Gewichtsprozent, sogar bei mehr als 0,025 Gewichtsprozent eine Transmission von mehr als 2,5%, insbesondere von mehr als 5% im sichtbaren Spektralbereich zwischen 450 und 750 Nanometern erreicht wird. Im Speziellen wurde an einer 3 Millimeter dicken Probe eine mit Normlicht C gemessene Lichttransmission im sichtbaren Spektralbereich, Y von 28,5% gemessen. Für die Normlichtart A wurde weiterhin eine Lichttransmission Y=31,5% im sichtbaren Spektralbereich gemessen. Bei Messung der Lichttransmission mit Normlichtart D65 ergab sich ein Wert Y=28,4%.

Anhand von Fig. 3 wird ein weiterer besonderer Effekt welcher die Entfärbung des Vanadinoxids durch einen hohen $Fe_2O_3$-Gehalt mit sich bringt, ersichtlich.

Die Entfärbung wirkt auf die Absorption im kurzwelligen sichtbaren Spektralbereich offensichtlich verhältnismäßig stärker als im langwelligeren sichtbaren Spektralbereich. Dies führt dazu, dass der Transmissionsverlauf deutlich linearer wird, als bei der Vergleichsprobe mit geringerem $Fe_2O_3$-Gehalt.

Wird mittels der Methode der kleinsten Quadrate jeweils eine Gerade im Wellenlängenbereich zwischen 450 und 700 Nanometern angefittet, so weist bei der Referenzglaskeramik das Bestimmtheitsmaß $R^2$ der Transmissionskurve 18 einen Wert von 0,9857 auf. Die Transmissionskurve 17 der Vergleichsprobe zeigt demgegenüber einen deutlich geringeren Wert von 0,861.

Das Bestimmtheitsmaß $R^2$ ist gegeben durch:

$$R^2 = 1 - \frac{\sum_{i=1}^{n}\left(Y_i - \hat{Y}_i\right)^2}{\sum_{i=1}^{n}\left(Y_i - \overline{Y}\right)^2}$$

$$(1)$$

In dieser Beziehung bezeichnen die Werte $Y_i$ die Transmissionsmesswerte bei den verschiedenen Wellenlängen, $\hat{Y}_i$ die entsprechenden Werte der an die Messwerte angepassten Geraden bei der jeweiligen, zu $Y_i$ korrespondierenden Wellenlänge und $\overline{Y}$ den Mittelwert der Werte $Y_i$. Der Index i nummeriert die einzelnen Transmissionsmesswerte $Y_i$ bis zum größten Wert n durch.

Das Bestimmtheitsmaß nimmt je nach linearer Korrelation der Messwerte einen Wert zwischen null (keine lineare Korrelation) und eins (perfekte lineare Korrelation der Meßwerte) an. Das Bestimmtheitsmaß von 0,9857 zeigt daher, dass der Transmissionsverlauf hochgradig linear ist.

Dieser Effekt ist insbesondere auch in den gelben bis blauen Spektralbereichen vorhanden. Für ein Wellenlängenintervall von 450 bis 600 Nanometern ergibt sich für die Referenzglaskeramik ein ähnlich hohes Bestimmtheitsmaß $R^2$ von 0,9829, während das Bestimmtheitsmaß bei der Vergleichsprobe nur bei 0,8589 liegt. Allgemein kann, wie anhand dieses Beispiels gezeigt wurde, Eisenoxid so zum Gemenge hinzudosiert werden, beziehungsweise die Gehalte

von Fe$_2$O$_3$ und V$_2$O$_5$ so ins Verhältnis gesetzt sein, dass bei gegebenem Vanadinoxidgehalt der spektrale Transmissionsverlauf in einem Wellenlängenbereich zwischen 450 und 600 Nanometern so linear wird, dass sich für eine an den Transmissionsverlauf der Glaskeramik mit der Methode der kleinsten Quadrate angepasste Gerade ein Bestimmtheitsmaß R$^2$ von mehr als 0,9, vorzugsweise mehr als 0,95 ergibt.

Dieses Merkmal ist besonders für die Verwendung farbiger Anzeigen von Vorteil. Sofern ein oder mehrere selbstleuchtende Anzeigeelemente Licht verschiedener Wellenlängen emittieren, erlaubt der annähernd lineare Transmissionsverlauf hier eine einfachere Anpassung der Anzeigeelemente für eine farbgetreue Wiedergabe.

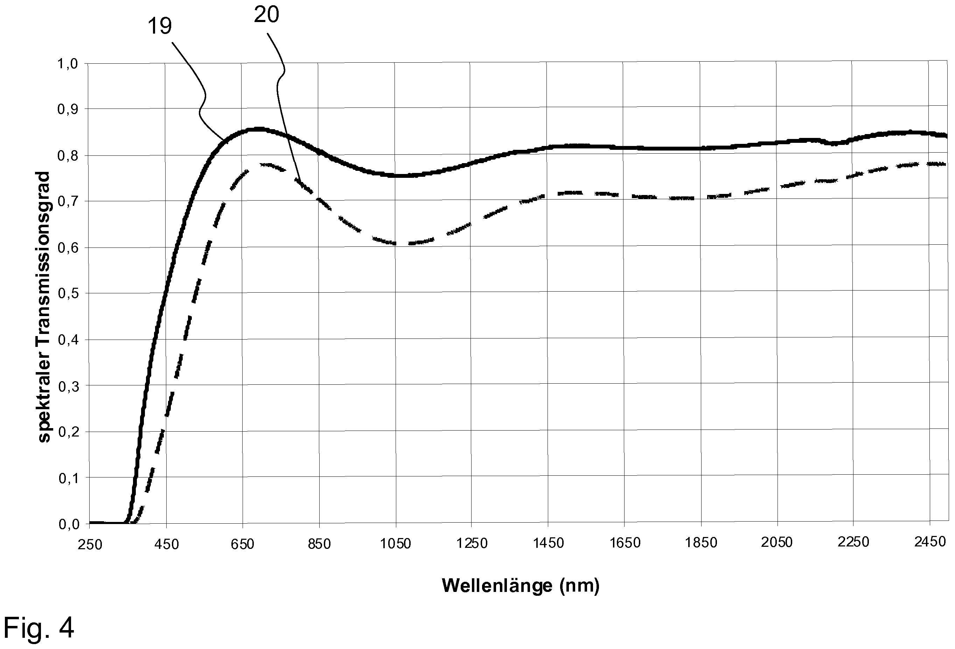

Sowohl die Färbung des Vanadinoxids, sowie auch die Entfärbung durch das Eisenoxid treten im Wesentlichen erst bei der Keramisierung des Ausgangsglases auf. Fig. 4 zeigt dazu im Vergleich zu Fig. 3 zwei Transmissionskurven der Ausgangsgläser beider Proben. Die Messungen der Fig. 4 wurden im Unterschied zu den Daten der Fig. 3 an 4 Millimeter dicken Proben durchgeführt. Die Transmissionskurve 19 wurde am Ausgangsglas der Vergleichsprobe, die Transmissionskurve 20 am Ausgangsglas der Referenzglaskeramik gemessen. Aufgrund des höheren Fe$_2$O$_3$-Gehalts der Referenzglaskeramik ist hier der spektrale Transmissionsgrad durchgehend niedriger. Zwar ergibt sich, wie anhand von Fig. 3 ersichtlich, durch das Eisenoxid auch bei der keramisierten Probe eine niedrigere Transmission im Infrarotbereich, dafür ist die Transmission im sichtbaren höher.

Die Transmission im sichtbaren Spektralbereich, beziehungsweise der Y-Wert sind auch abhängig von der Dicke der Glaskeramikplatte. Bei dem Beispiel der Fig. 3 betrug die Dicke wie gesagt 3 Millimeter. Würde eine dickere, beispielsweise 4 Millimeter dicke Platte verwendet, so sinkt bei der gleichen Zusammensetzung des Ausgangsglases wiederum die Transmission. Der Vanadinoxid-Gehalt kann daher auch vorteilhaft in Abhängigkeit der Plattendicke eingestellt werden. Im Speziellen ist in Weiterbildung der Erfindung vorgesehen, dass der Vanadinoxid-Gehalt zumindest 0,066/x Gewichtsprozent beträgt, wobei x die Dicke der Glaskeramik in Millimetern bezeichnet.

Entsprechend kann auch der Eisenoxid- und/oder Ceroxid-Gehalt in Abhängigkeit von der Plattendicke eingestellt werden, um bestimmte Transmissionswerte unabhängig von der Plattendicke zu erzielen. Gemäß noch einer Weiterbildung der Erfindung ist daher vorgesehen, dass der Eisenoxid- oder Ceroxid Gehalt zumindest 0,4/x Gewichtsprozent beträgt, wobei x die Dicke der Glaskeramik in Millimetern bezeichnet.

Die Glaskeramikplatten erweisen sich hinsichtlich der Färbung und Absorption auch als zu üblichen Glaskeramiken vergleichbar standfest unter extremen Betriebsbedingungen eines Glaskeramik-Kochfelds.

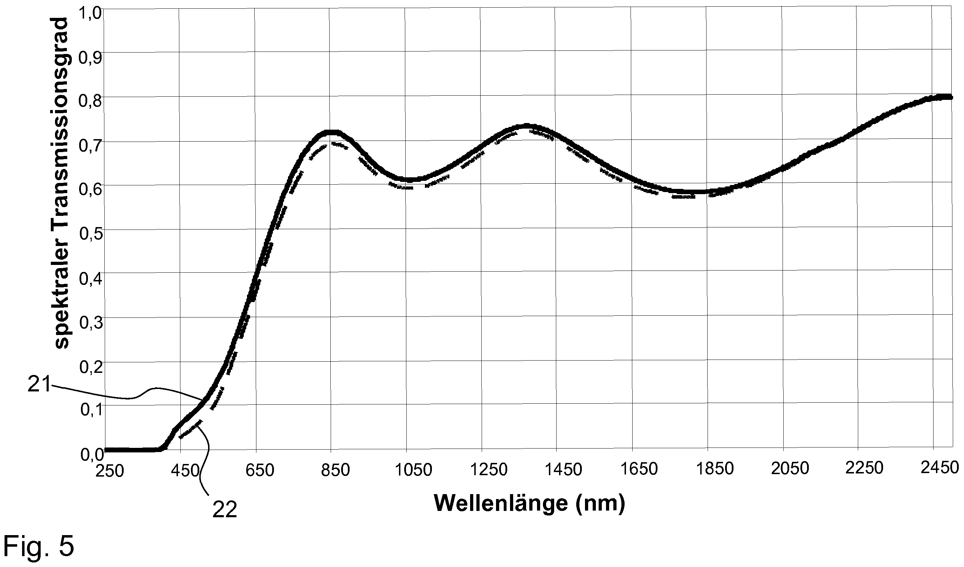

Fig. 5 zeigt dazu zwei Transmissionskurven 21, 22, die beide an der erfindungsgemäßen Glaskeramik, die auch den Beispielen der Fig. 3 und 4 zu Grunde liegt, gemessen wurde. Dementsprechend weist die Glaskeramik einen Fe$_2$O$_3$-Anteil von 0,2 Gewichtsprozent auf. Aus der Glaskeramik wurde eine ca. 4 Millimeter dicke Probe präpariert und an dieser Probe die Transmissionskurve 21 gemessen.

Es wurde dann eine Nachtemperung bei 800°C für eine Dauer von 10 Stunden vorgenommen und dann die Transmissionskurve 22 gemessen. Die Transmission im sichtbaren Spektralbereich liegt demnach nach der Temperung noch bei 78 % des Ausgangswert bei der Lichttransmission Y. Zwar sinkt die Transmission, allerdings liegt die prozentuale Absenkung der Transmission im Bereich dessen, was auch an anderen volumengefärbten LAS-Glaskeramiken ermittelt wird. Absolut gesehen bleibt die Transmission im sichtbaren Spektralbereich insbesondere auch deutlich höher, als bei der Vergleichsprobe mit niedrigerem Fe$_2$O$_3$-Gehalt von weniger als 0,1 Gewichtsprozent.

Der Einfluss von Eisenoxid und Zinnoxid auf die Transmission der Glaskeramik kann außerdem gut anhand der in der nachfolgenden Tabelle aufgelisteten Ausführungsbeispiele belegt werden:

| Probe | 1 | 2 | 3 | 4 | 5 | 6 | 7 | 8 |
|---|---|---|---|---|---|---|---|---|
| Komponente | [ppm] | [ppm] | [ppm] | [ppm] | [ppm] | [ppm] | [ppm] | [ppm] |
| CoO | 0 | 0 | 0 | 0 | 0 | 0 | 0 | 0 |
| NiO | 0 | 0 | 0 | 0 | 0 | 0 | 0 | 0 |
| Cr2O3 | 0 | 0 | 0 | 0 | 0 | 0 | 0 | 0 |
| Nd2O3 | 0 | 0 | 0 | 0 | 0 | 0 | 0 | 0 |
| Er2O3 | 0 | 0 | 0 | 0 | 0 | 0 | 0 | 0 |
| MnO2 | 1 | 1 | 1 | 1 | 1 | 1 | 1 | 1 |
| Fe2O3 | 100 | 500 | 750 | 1250 | 1500 | 2000 | 2500 | 3000 |
| TiO2 | 31000 | 31000 | 31000 | 31000 | 31000 | 31000 | 31000 | 31000 |
| SnO2 | 2500 | 2500 | 2500 | 2500 | 2500 | 2500 | 2500 | 2500 |
| V2O5 | 220 | 220 | 220 | 220 | 220 | 220 | 220 | 220 |
| ZrO2 | 13248 | 13248 | 13248 | 13248 | 13248 | 13248 | 13248 | 13248 |
| (Sn+0.1Ti)/Fe | 56,00 | 11,20 | 7,47 | 4,48 | 3,73 | 2,80 | 2,24 | 1,87 |

(fortgesetzt)

| Probe | 1 | 2 | 3 | 4 | 5 | 6 | 7 | 8 |
|---|---|---|---|---|---|---|---|---|
| **Komponente** | **[ppm]** | **[ppm]** | **[ppm]** | **[ppm]** | **[ppm]** | **[ppm]** | **[ppm]** | **[ppm]** |
| Fe/V (5-30) | 0,45 | 2,27 | 3,41 | 5,68 | 6,82 | 9,09 | 11,36 | 13,64 |
| Y (4mm) | 1,89 | 2,1 | 2,25 | 2,58 | 2,77 | 3,17 | 3,64 | 4,17 |

Die Dicke der Proben beträgt 4 mm. Die Grundzusammensetzung der Proben 1 bis 8 entspricht im Wesentlichen der in der Beschreibung zu Fig. 3 angegebenen Zusammensetzung mit 65,14 Gewichtsprozent $SiO_2$ und 20,9 Gewichtsprozent $Al_2O_3$. Der Vanadinoxid-Gehalt ist mit 220 ppm (0,02 Gew%) etwas geringer, als bei den Beispielen der Fig. 3 (260 ppm), der $SnO_2$-Gehalt mit 2500 ppm statt 2400 ppm geringfügig höher. Wie anhand der Tabelle ersichtlich, wurde mit steigender Probennummer der Eisenoxid-Gehalt von 100 ppm bis 3000 ppm sukzessive erhöht.

Bei den Proben 1 bis 3 ist der Eisenoxid-Gehalt noch niedriger als 1000 ppm, bei Probe 4 wird mit 1250 ppm ein $Fe_2O_3$-Gehalt von mehr als 1000 ppm erreicht. Während bei den Vergleichsbeispielen der Proben 1 bis 3 die Transmission (angegeben als Y-Farbwert) noch bei unter 2,5% liegt, wird dieser Wert bei Probe 4 überschritten. Die Transmission steigt auch tatsächlich mit steigendem $Fe_2O_3$-Gehalt weiter deutlich an, wie anhand der Transmissionswerte der Proben 4 bis 8 ersichtlich ist, wobei bei einem $Fe_2O_3$-Gehalt von 3000 ppm bei der gegebenen Plattendicke von 4 Millimetern eine Transmission im sichtbaren Spektralbereich von 4,17% erreicht wird.

Die Bedingung, dass das Verhältnis der Komponenten $(M(SnO_2) + 0,1* M(TiO_2)) / (M(Fe_2O_3) + M(CeO_2)) < 4$ (angegeben in der Tabelle als (Sn+0.1Ti)/Fe) in Gewichtsprozent kleiner als 4 ist, wird von allen erfindungsgemäßen Proben 5 bis 8 erreicht. Bei den Proben 5 bis 8 liegt das Verhältnis bei unter drei.

Auch ist bei allen Referenzproben 4 bis 8 das Verhältnis der Gewichtsanteile $Fe_2O_3/V_2O5$ (in der Tabelle abgekürzt geschrieben als Fe/V) zwischen 5 und 20, wie bevorzugt erfindungsgemäß vorgesehen, während bei den Proben 1 bis 3 der Wert dieses Verhältnisses kleiner als 5 ist.

Anhand dieser Beispiele wird ersichtlich, dass die Transmission eines Glaskeramikartikels mit gegebener Vanadinoxid-haltiger Zusammensetzung durch Hinzudosieren von Eisenoxid in einfacher Weise eine vorbestimmte Transmission eingestellt werden kann. Der Transmissionswert ist selbstverständlich auch von der Dicke des Glaskeramik-Artikels abhängig. Wird eine niedrigere Dicke als die 4 Millimeter des Beispiels hergestellt, reicht für einen bestimmten Transmissionswert dann eine geringere Menge von Eisenoxid. Um einen Glaskeramik-Artikel, wie insbesondere ein Glaskeramik-Kochfeld mit vorbestimmter Transmission herzustellen, wird also zunächst ein Transmissionswert von 2,5% oder mehr im sichtbaren Spektralbereich festgelegt, wobei der Transmissionswert höher liegt, als der Transmissionswert einer aus demselben Vanadinoxid-haltigen Gemenge, jedoch mit einem Eisenoxid-Gehalt von weniger als 0,1 Gewichtsprozent hergestellten Glaskeramik. Dann wird Eisenoxid der Schmelze oder dem zu schmelzenden Gemenge in einer Menge zugegeben, welche die Absorption des Vanadinoxids im sichtbaren Spektralbereich so weit aufhebt, dass der festgelegte Transmissionswert in der Glaskeramik bei der vorgesehenen Dicke des Glaskeramikartikels erreicht wird. Das Verfahren kann mit CeO2 anstelle oder zusätzlich zu $Fe_2O_2$ ebenso durchgeführt werden.

Auch $CeO_2$ ist sehr effektiv als Entfärbemittel für $V_2O_5$-haltige Glaskeramiken, wie das folgende Ausführungsbeispiel zeigt. Es wurden zwei Lithium-Aluminosilikat-Glaskeramikproben ähnlicher Zusammensetzung hergestellt, von denen die Vergleichsprobe einen $V_2O_5$-Gehalt von 0,2 Gewichtsprozent aufweist. Bei der Referenzprobe wurde mit 0,4 Gewichtsprozent ein doppelt so hoher $V_2O_5$-Gehalt vorgesehen. Wird zu diesem Gemenge noch 0,5 Gewichtsprozent $CeO_2$ hinzugegeben, so bleibt die Transmission fast gleich hoch, obwohl $V_2O_5$ wie oben bereits gesagt ein sehr stark färbendes, beziehungsweise im sichtbaren Spektralbereich stark absorbierendes Färbemittel ist. Mit anderen Worten kompensiert die Zugabe von $CeO_2$ eine Verdoppelung des $V_2O_5$-Gehalts hinsichtlich der Transmission im sichtbaren Spektralbereich.

Die Gemenge der Referenzprobe und der Vergleichsprobe weisen folgende Zusammensetzungen auf:

| Komponente: | Vergleichsprobe: | Referenzprobe: |
|---|---|---|
| $Al_2O_3$ | 22,47 | 22,21 |
| $K_2O$ | 0,20 | 0,20 |
| $Li_2O$ | 4,08 | 4,00 |
| MgO | 1,00 | 0,98 |
| $Na_2O$ | 0,64 | 0,64 |
| $P_2O_5$ | 1,33 | 1,32 |
| $SiO_2$ | 65,84 | 65,35 |
| $SnO_2$ | 0,44 | 0,40 |

(fortgesetzt)

| Komponente: | Vergleichsprobe: | Referenzprobe: |
|---|---|---|
| $TiO_2$ | 1,80 | 1,80 |
| $V_2O_5$ | 0,20 | 0,41 |
| ZnO | 0,20 | 0,20 |
| $ZrO_2$ | 2,00 | 2,00 |
| ZnO | 0,00 | 0,20 |
| $CeO_2$ | 0,00 | 0,50 |

Die Lichttransmission der keramisierten Proben im sichtbaren Spektralbereich ist bei einer 4 mm dicken Vergleichsprobe 1,2%, bei der mit $CeO_2$ entfärbten Probe noch 1,1%. Bei einer Wellenlänge von 600 Nanometern ist die Transmission der Vergleichsprobe 2,49 %. Die Transmission der mit CeO2 entfärbten Probe ist mit 2,44 % praktisch gleich groß.

In einer bevorzugten Ausführung soll der $CeO_2$ -Gehalt höchstens 0,6 Gew.% sein. Höhere Gehalte sind angesichts des nachlassenden Effekts unwirtschaftlich.

Für die Ausführungsform der im Volumen transparenten Glaskeramik ist dabei Eisenoxid als Färbemittel im Gemenge enthalten. Anders als bei transparent eingefärbten Glaskeramiken unterbleibt vorzugsweise die Zugabe weiterer Färbemittel wie Vanadin-, Nickel-, Kobalt-Verbindungen weil eine möglichst hohe Lichttransmission gewünscht ist. Zusätze von Neodymoxid als physikalisches Mittel zur Entfärbung sind optional möglich. Bei dieser Zugabe wird durch die zusätzlichen Absorptionsbanden die Farbe der Glaskeramik verringert. Im Unterschied zum Verfahren geht dies jedoch zu Lasten der Lichttransmission weshalb der Gehalt an Neodymoxid begrenzt ist.

Das im Gemenge enthaltene Eisenoxid färbt zum einen als $Fe^{3+}$ im kurzwelligen Teil des Spektrums und insbesondere bei der Keramisierung durch Bildung von Fe/Ti-Farbkomplexen. Das $Fe^{2+}$ absorbiert im nahen Infrarot. Eisenoxid ist polyvalent und kann durch Übergang zwischen den Oxidationsstufen seine Färbewirkung stark variieren. Zudem ist die Färbewirkung in Verbindung mit dem vorteilhaften Keimbildner $TiO_2$ stark. Dies ist umso mehr kritisch weil bei der Ausführung als transparente Glaskeramik Lichttransmissionswerte von größer 80, bevorzugt größer 83% (bei 4 mm Dicke) gewünscht sind. Bei der wirtschaftlichen Herstellung ist das Eisenoxid in den Gemengerohstoffen in Gehalten von typischerweise ca. 0,005 bis 0,05 Gew.% enthalten. Das Titanoxid ist als Keimbildner in Gehalten von mindestens 1 Gew.% bevorzugt enthalten, weil es für die Schmelzeigenschaften und die Keramisierung vorteilhaft ist.

Bevorzugt weist eine transparente Glaskeramik, beziehungsweise das zur Herstellung der Glaskeramik bereitgestellte Gemenge folgende wesentlichen Komponenten in Gewichtsprozent auf Oxidbasis auf:

| | |
|---|---|
| $Li_2O$ | 3 - 5, |
| $Al_2O_3$ | 18 - 25, |
| $SiO_2$ | 55 - 75, |
| $TiO_2$ | 1 - 2,5. |
| $Fe_2O_3$ | 0,005 - 0,05 |

Weiter bevorzugt haben die transparenten Glaskeramiken eine Zusammensetzung die im Wesentlichen besteht aus den Komponenten in Gew.% auf Oxidbasis

| | |
|---|---|
| $Li_2O$ | 3 - 5 |
| $\sum Na_2O+K_2O$ | 0,2-2,0 |
| MgO | 0- 2 |
| $\sum CaO+SrO+BaO$ | 0 - 4 |
| ZnO | 0- 3 |
| $B_2O_3$ | 0- 2 |
| $Al_2O_3$ | 18-25 |
| $SiO_2$ | 55-75 |
| $TiO_2$ | 1 - 2,5 |
| $ZrO_2$ | 1 - 2 |
| $SnO_2$ | 0-0,4 |
| $\sum SnO_2+TiO_2$ | < 2,7 |
| $P_2O_5$ | 0-3,0 |

(fortgesetzt)

| | |
|---|---|
| Fe$_2$O$_3$ | 0,005 - 0,05 |
| Nd$_2$O$_3$ | 0 - 0,4 |
| CoO | 0 -0,004 |

und Zusatz eines chemischen Läutermittel wie SnO$_2$, As$_2$O$_3$, Sb$_2$O$_3$, und Sulfat-, Chlorid-Verbindungen in Gesamtgehalten bis zu 2,0 Gew.-%.

Als Entfärbemittel, insbesondere auch für das Färbemittel Eisenoxid hat sich Selenoxid als sehr wirksam erwiesen. Gemäß einer Ausführungsform ist daher Eisenoxid als Färbemittel im Gemenge enthalten und Selenoxid wird als Entfärbemittel zur Einstellung einer gewünschten, beziehungsweise vorgegebenen erhöhten Transmission vor oder während der Herstellung des Ausgangsglases, also insbesondere vor oder während des Schmelzens einschließlich des Läuterns hinzugegeben. Vorzugsweise werden bis zu 0,5 Gew.% Selenoxid zugesetzt. Die Wirkung ist überraschend weil der überwiegende Teil bei der Schmelze verdampft.

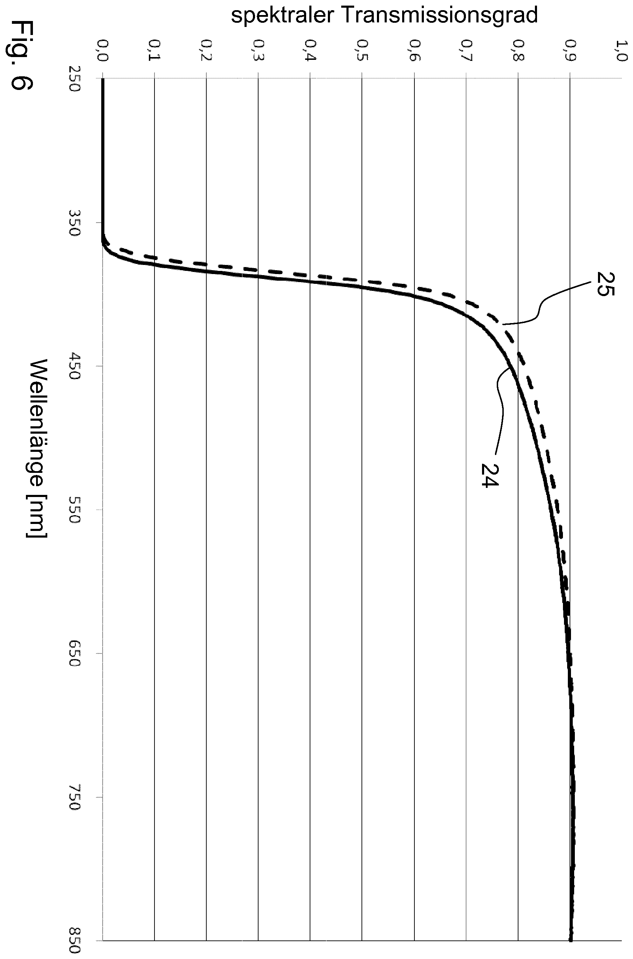

Fig. 6 zeigt dazu Transmissionskurven einer mit Selenoxid entfärbten Glaskeramik (Kurve 25) und einer Vergleichsprobe (Kurve 24) mit bis auf die Zugabe des Selenoxids gleicher Zusammensetzung. Wie anhand der beiden Kurven 24, 25 ersichtlich, führt die Zugabe von Selenoxid zu einer transmissionsteigernden Entfärbung des im bereitgestellten Gemenge enthaltenen Eisenoxids im sichtbaren Spektralbereich zwischen 450 und 750 Nanometern. Die Entfärbung bewirkt hier auch eine Verschiebung der Absorptionskante zu kleineren Wellenlängen.

Es ergeben sich folgende Werte der Transmission im sichtbaren Spektralbereich für 4 mm Dicke. Angegeben ist jeweils der Y-Wert des CIE-Farbmodells, sowie der Yellowness-Wert (nach nach Norm ASTM 1925/70 (77, 85):

    a) Normlicht A:

        Vergleichsprobe (Kurve 24): Y=87,0%,
        Entfärbte Glaskeramik (Kurve 25): Y=88,1%.

    b) Normlicht D65:

        Vergleichsprobe (Kurve 24): Y=86,3%,
        Entfärbte Glaskeramik (Kurve 25): Y=87,5%.

    c) Normlicht C:

        Vergleichsprobe (Kurve 24): Y=86,3%,
        Entfärbte Glaskeramik (Kurve 25): Y=87,5%.
        Unter Normlicht C entspricht dies einer Transmissionssteigerung von etwa 1,2%.

Maß für die Aufhellung ist hier auch der Yellowness-Index. Dieser beträgt bei der hergestellten Glaskeramik 8,9, bei der Vergleichsprobe hingegen 11,2.

Die Zusammensetzung des bereitgestellten Gemenges, also dementsprechend auch die Zusammensetzung der Vergleichsprobe in Gew.%, gemessen mit Röntgenfluoreszenz an der Glaskeramik ist wie folgt:

| | |
|---|---|
| Al$_2$O$_3$ | 19,44 |
| As$_2$O$_3$ | 0, 93 |
| BaO | 0,81 |
| CaO | 0,037 |
| Fe$_2$O$_3$ | 0,024 |
| K$_2$O | 0,205 |
| MgO | 1,10 |
| MnO$_2$ | 0,002 |
| Na$_2$O | 0,15 |
| P$_2$O$_5$ | 0,03 |
| SiO$_2$ | 67,89 |
| SnO$_2$ | 0,00 |
| TiO$_2$ | 2,67 |

(fortgesetzt)

| | |
|---|---|
| V$_2$O$_5$ | 0,00 |
| ZnO | 1,47 |
| ZrO$_2$ | 1,78 |

Für die entfärbte Glaskeramik wurden zusätzlich 1000 ppm Selenoxid zum Gemenge hinzugegeben. Bei den Beispielen handelt es sich um transparente, mit As$_2$O$_3$ geläuterte Glaskeramiken ohne V$_2$O$_5$. Bei der Zugabe von 1000ppm SeO verbleiben nur ca 10 ppm SeO$_2$ in der Glaskeramik. Die hergestellte Glaskeramik unterscheidet sich damit trotz der unterschiedlichen Transmission in der Zusammensetzung praktisch nicht von der Vergleichsprobe.

Gemäß noch einer Ausführungsform wird ein transparenter Lithium-Aluminosilikat-Glaskeramikartikel hergestellt, welcher ohne, oder zumindest ohne wesentliche Anteile (in Summe weniger als 0,1 Gew%) von Arsen- und Antimonoxid geläutert ist. Alternativ wird vorzugsweise mit Zinnoxid und/oder Chlor- sowie Sulfat-Verbindungen geläutert. Bei Anwesenheit von Sn bildet sich neben dem Fe/Ti- zusätzlich ein Sn/Ti- Farbkomplex. Bei dieser Glaskeramik hat sich auch die Zugabe von Arsenoxid in Gehalten bis zu 0,2 Gew.% als Entfärbemittel bewährt. In der Glaskeramik sollten höchstens 0,1 Gew.% As$_2$O$_3$ als Bestandteil verbleiben. Der Zusatz von Selenoxid kann dabei zusätzlich erfolgen.

Gemäß einer Weiterbildung ist daher vorgesehen, dass ein Gemenge mit Eisenoxid als Färbemittel und Titanoxid als Keimbildner bereitgestellt wird, wobei als Entfärbemittel Arsenoxid in Gehalten kleiner 0,2 Gew.% hinzugegeben wird. Dabei wird vorzugsweise ohne Antimonoxid mit Zinnoxid und/oder Chlor- bzw. Sulfat-Verbindungen geläutert. Die bevorzugt Läuterung mit 0,15 bis 0,5 Gew.% Zinnoxid kann durch Chlorid-und/oder Sulfatverbindungen sowie durch eine Hochtemperaturläuterung oberhalb 1750 °C unterstützt werden. Zusätze von Fluor- oder Brom-Verbindungen zur Läuterung sind ungünstig wegen der korrosiven Wirkung der Dämpfe auf das Schmelzaggregat. Deren Gehalte in der Glaskeramik resultierend aus Gemengeverunreinigungen liegen üblicherweise unter 0,04 Gew.%.

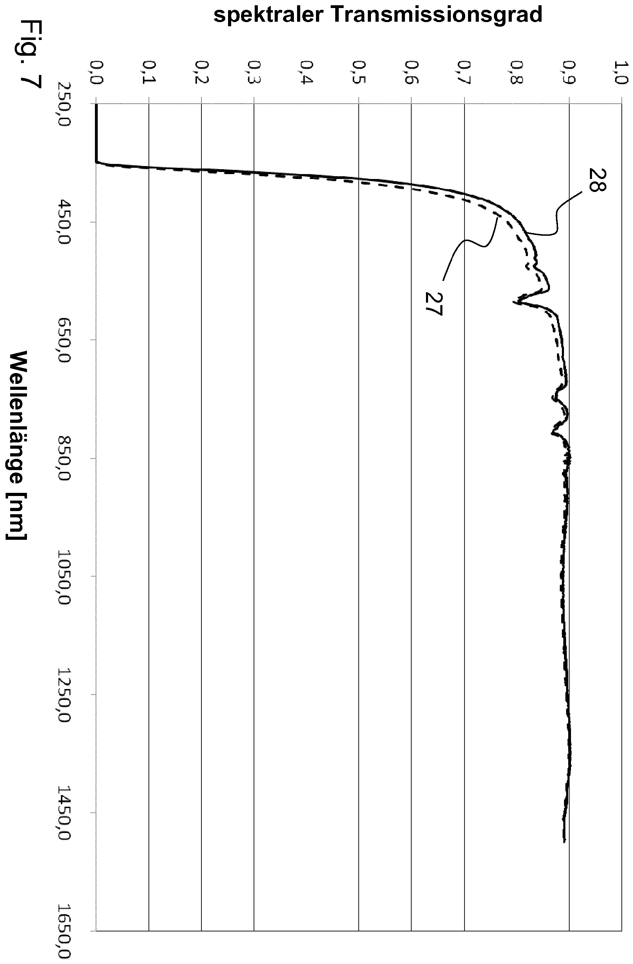

Fig. 7 zeigt für 4 mm Probendicke dazu Transmissionskurven einer mit Arsenoxid entfärbten Glaskeramik (Kurve 28) und einer Vergleichsprobe (Kurve 27). Die Zusammensetzungen beider Glaskeramiken sind identisch, bis auf den Zusatz des Arsenoxids in der Glaskeramik.

Die Zusammensetzung des bereitgestellten Gemenges, also dementsprechend auch die Zusammensetzung der Vergleichsprobe ist wie folgt:

| Komponente | Gew% |
|---|---|
| Li$_2$O | 3,66 |
| Na$_2$O | 0,55 |
| K$_2$O | 0,10 |
| MgO | 0, 63 |
| CaO | 0,24 |
| BaO | 0,55 |
| ZnO | 1,90 |
| Al$_2$O$_3$ | 21,63 |
| SiO$_2$ | 66,03 |
| SnO$_2$ | 0,20 |
| SrO | 0,51 |
| TiO$_2$ | 2,17 |
| ZrO$_2$ | 1,75 |
| Fe$_2$O$_3$ | 0,011 |
| Nd$_2$O$_3$ | 0,061 |
| As$_2$O$_3$ | 0,0 |

Für die Referenzglaskeramik wurden dazu 0,055 Gew% As$_2$O$_3$ hinzugegeben von denen 0,046 Gew.% in der Glaskeramik verbleiben.

Der Effekt der Transmissionssteigerung durch Entfärbung des Färbemittels Fe$_2$O$_3$ im sichtbaren Spektralbe-reich ist anhand der höheren Transmission der Kurve 28 gegenüber der Transmissionskurve 27 der Vergleichsprobe deutlich zu erkennen und entspricht einer Erhöhung der Lichttransmission Y von 83,4 auf 84,7 % (Normlicht C, 4 mm Dicke) .

Für den der Erfindung zugrundeliegenden Entfärbemechanismus bei transparenter Glaskeramik erweist es sich ebenfalls als günstig, entsprechend keine zu hohen Gehalte an Zinn- und Titanoxid vorzusehen, da diese mit dem Eisenoxid Farbkomplexe bilden können. Demgemäß ist in Weiterbildung der Erfindung vorgesehen, dass die transparente Glaskeramik einen Gehalt von Zinnoxid von weniger als 0,5 Gewichtsprozent, vorzugsweise einen Gehalt von Zinnoxid im Bereich von 0,15 bis 0,4 Gewichtsprozent, besonders bevorzugt im Bereich von 0,15 bis 0,25 Gewichtsprozent aufweist. Diese Zinnoxid-Gehalte sind im Allgemeinen ausreichend, um auch ohne nennenswerte Mengen von Arsenoxid, $As_2O_3$ oder Antimonoxid, $Sb_2O_3$ das Ausgangsglas der Glaskeramik zu läutern. Optional kann die Läuterung über Chlor- und/oder Sulfat-Verbindungen auch in Kombination mit Zinnoxid durchgeführt werden. Eine Hochtemperaturläuterung von größer 1700, bevorzugt größer 1750 °C kann die Läuterung verbessern. Vorzugsweise beträgt auch hier der Gehalt von $As_2O_3$ und $Sb_2O_3$ zusammen weniger als 0,1 Gewichtsprozent, besonders bevorzugt ist die Glaskeramik technisch frei von diesen Läutermitteln. Diese sind also mit gängigen Verfahren zur Bestimmung der Gewichtsanteile dann nicht nachweisbar.

Für den Titanoxid-Gehalt ist es hier günstig, wenn dieser nicht höher als 2,5 Gewichtsprozent liegt. Bevorzugt wird ein Gehalt von 1 bis 2,5 Gewichtsprozent. Mit diesem Gehalt wird gleichzeitig sichergestellt, dass eine hinreichende Keimbildung zur Keramisierung erfolgt, denn Titanoxid wirkt als Keimbildner. Als transparente Glaskeramik im Sinne der vorstehenden beschriebenen Ausführungsformen wird eine Glaskeramik bezeichnet, die bei einer Dicke von 2 bis 7 Millimetern eine Transmission im sichtbaren Spektralbereich von mindestens 60% aufweist.

**Patentansprüche**

1. Verwendung von Eisenoxid und/oder Ceroxid als Entfärbemittel um die Lichttransmission im sichtbaren Spektralbereich eines Lithium-Aluminosilikat-Glaskeramikartikels, insbesondere einer Lithium-Aluminosilikat-Glaskeramikplatte, einzustellen mit den Schritten:

   - Bereitstellen eines Gemenges für die Lithium-Aluminosilikat-Glaskeramik, wobei das Gemenge ein Färbemittel, insbesondere ein Farboxid aufweist, welches in der Glaskeramik Licht im sichtbaren Spektralbereich zwischen 450 und 750 Nanometern absorbiert,
   und wobei ein Gemenge mit mindestens 0,005 Gewichtsprozent Vanadinoxid als Färbemittel bereitgestellt wird,
   - Einschmelzen des Gemenges und Herstellen eines Glas-Vorprodukts, und
   - Keramisieren des Glas-Vorprodukts, um einen Glaskeramik-Artikel zu erhalten,
   - wobei dem Gemenge vor oder während dem Schmelzen das Entfärbemittel hinzugegeben wird, welches bei der Keramisierung die Absorption des Färbemittels in zumindest einem Teilintervall des sichtbaren Spektralbereichs reduziert, so dass insgesamt die Transmission des Glaskeramik-Artikels im sichtbaren Spektralbereich zwischen 450 und 750 Nanometern zumindest gleich bleibt, vorzugsweise angehoben wird, wobei in Abhängigkeit von einer zuvor festgelegten Lichttransmission des Glaskeramik-Artikels im sichtbaren Spektralbereich bei Beleuchtung senkrecht zur Oberfläche des Glaskeramik-Artikels von mehr als 2,5% der Anteil des Entfärbemittels in der Glaskeramik-Zusammensetzung bestimmt und die dem Anteil entsprechende Menge des Entfärbemittels zum Gemenge hinzugegeben wird,

   wobei als Entfärbemittel mindestens 0,1 Gewichtsprozent Eisenoxid und/oder mindestens 0,1 Gewichtsprozent Ceroxid hinzugegeben wird,
   wobei der Eisenoxidgehalt mindestens so groß oder größer als der Vanadingehalt ist,
   wobei in der Zusammensetzung der Glaskeramik die Gehalte von Zinnoxid, Titanoxid, Eisenoxid und Ceroxid die Beziehung
   $(M(SnO_2) + 0,1* M(TiO_2)) / (M(Fe_2O_3) + M(CeO2)) < 4$, vorzugsweise <3 erfüllen, wobei M jeweils den Anteil der in der nachstehenden Klammer genannten Komponente in Gewichtsprozent bezeichnet, und wobei der Ceroxidgehalt höchstens 0,6 Gewichtsprozent beträgt.

2. Verwendung gemäß dem vorstehenden Anspruch, **dadurch gekennzeichnet, dass** die Summe der Gewichtsanteile von Eisenoxid und Ceroxid an dem Lithium-Aluminosilikat-Glaskeramikartikel zwischen einem Faktor von 5 bis zu einem Faktor von 20 größer ist als der Gewichtsanteil von Vanadinoxid.

3. Verwendung gemäß einem der vorstehenden Ansprüche, wobei nacheinander mehrere Glaskeramik-Artikel mit unterschiedlicher Transmission hergestellt werden, indem die Zugabe des Entfärbemittels variiert wird.

4. Verwendung gemäß einem der vorstehenden Ansprüche, **dadurch gekennzeichnet, dass** das Ausgangsglas für das Glas-Vorprodukt in einer Wanne in einem kontinuierlichen Schmelzprozess hergestellt wird.

5. Verwendung gemäß einem der vorstehenden Ansprüche, **dadurch gekennzeichnet, dass** zur Herstellung der Glaskeramik ein Gemenge bereitgestellt wird, welches folgende Komponenten in Gewichtsprozent auf Oxidbasis aufweist:

| | |
|---|---|
| $Li_2O$ | 3 - 5, |
| $Al_2O_3$ | 18 - 25, |
| $SiO_2$ | 55 - 75, |

$TiO_2$ 1 - 5, wobei für transparente Glaskeramik ein Gehalt von $TiO_2$ im Bereich von 1 - 2,5 Gewichtsprozent bevorzugt wird.

6. Verwendung gemäß einem der vorstehenden Ansprüche, **dadurch gekennzeichnet, dass** Vanadinoxid als Färbemittel und Eisenoxid als Entfärbemittel verwendet wird, wobei das Eisenoxid so zum Gemenge hinzudosiert wird, dass bei gegebenem Vanadinoxidgehalt der spektrale Transmissionsverlauf der Glaskeramik in einem Wellenlängenbereich zwischen 450 und 600 Nanometern so linear wird, dass sich für eine an den Transmissionsverlauf der Glaskeramik mit der Methode der kleinsten Quadrate angepasste Gerade in einem Wellenlängenbereich von 450 bis 600 Nanometern ein Bestimmtheitsmaß $R^2$ von mehr als 0,9, vorzugsweise mehr als 0,95 ergibt.

7. Verwendung nach Anspruch 6, **dadurch gekennzeichnet, dass** ein Gemenge mit Eisenoxid als Färbemittel und Titanoxid als Keimbildner bereitgestellt wird.

8. Verwendung nach Anspruch 7, **dadurch gekennzeichnet, dass** als weiteres Entfärbemittel Selenoxid hinzugegeben wird.

9. Verwendung nach Anspruch 7, **dadurch gekennzeichnet, dass** als weiteres Entfärbemittel Arsenoxid in Gehalten kleiner 0,2 Gew.% hinzugegeben wird, wobei vorzugsweise ohne Antimonoxid mit Zinnoxid und/oder Chlor- bzw. Sulfat-Verbindungen geläutert wird.

10. Verwendung gemäß einem der vorstehenden Ansprüche, **dadurch gekennzeichnet, dass** ein Gemenge verwendet wird, bei welchem Gewichtsanteil an Chrom oder Chromoxid kleiner als 0,01%, vorzugsweise kleiner als 0,005%, ist.

**Claims**

1. Use of iron oxide and/or cerium oxide as a decolouring agent for adjusting the light transmittance of a lithium aluminosilicate glass ceramic article, in particular of a lithium aluminosilicate glass ceramic panel, in the visible spectral range, comprising the steps of:

   - providing a batch for the lithium aluminosilicate glass ceramic, said batch including a colour-imparting agent, in particular a colour-imparting oxide which absorbs light in the glass ceramic in the visible spectral range between 450 and 750 nanometres, and wherein a batch is provided with at least 0.005 percent by weight of vanadium oxide as the colour-imparting agent;
   - melting the batch and producing a glass precursor; and
   - ceramizing the glass precursor to obtain a glass ceramic article;
   - wherein prior to or during the melting, a decolouring agent is added to the batch, which decolouring agent reduces the absorptivity of the colouring agent in at least a sub-region of the visible spectral range upon ceramization, so that, in total, the transmittance of the glass ceramic article at least remains the same and preferably increases in the visible spectral range between 450 and 750 nanometres, wherein the proportion of the decolouring agent in the glass ceramic composition is determined on the basis of a predefined light transmittance of greater than 2.5 % of the glass ceramic article in the visible spectral range when illuminated perpendicular to the surface of the glass ceramic article, and an amount of the decolouring agent corresponding to this proportion is added to the batch;

   wherein at least 0.1 percent by weight of iron oxide and/or at least 0.1 percent by weight of cerium oxide is added as the decolouring agent;
   wherein the iron oxide content is at least the same or greater than the vanadium oxide content;
   wherein the contents of tin oxide, titanium oxide, iron oxide, and cerium oxide in the composition of the glass ceramic meet the relationship

$(M(SnO_2) + 0.1\ M(TiO_2)) / (M(Fe_2O_3) + M(CeO_2)) < 4$, preferably $< 3$,
wherein M is the respective proportion, in percent by weight, of the component in the following brackets, and wherein the cerium oxide content is at most 0.6 percent by weight.

2. Use according to the preceding claim, **characterised in that** the sum of the weight fractions of iron oxide and cerium oxide in the lithium aluminosilicate glass ceramic article is greater than the weight fraction of vanadium oxide by a factor of 5 up to a factor of 20.

3. Use according to any one of the preceding claims, wherein a plurality of glass ceramic articles of different transmittance are produced successively by varying the addition of the decolouring agent.

4. Use according to any one of the preceding claims, **characterised in that** the starting glass for the glass precursor is prepared in a tank in a continuous melting process.

5. Use according to any one of the preceding claims, **characterised in that** for producing the glass ceramic a batch is provided comprising the following constituents, in percent by weight, on an oxide basis:

| | |
|---|---|
| $Li_2O$ | 3-5, |
| $Al_2O_3$ | 18-25, |
| $SiO_2$ | 55-75, |
| $TiO_2$ | 1-5, |

wherein a content of $TiO_2$ in a range from 1 to 2.5 percent by weight is preferred for a transparent glass ceramic,

6. Use according to any one of the preceding claims, **characterised in that** vanadium oxide is used as the colour-imparting agent and iron oxide as the decolouring agent, wherein the iron oxide is metered to the batch such that for a given vanadium oxide content the spectral transmittance characteristic of the glass ceramic in a range of wavelengths between 450 and 600 nanometres becomes linear to such a degree that for a straight line fitted to the transmittance characteristic of the glass ceramic using the method of least squares, a resulting coefficient of determination $R^2$ is greater than 0.9, preferably greater than 0.95 in a range of wavelengths between 450 and 600 nanometres.

7. Use according to claim 6, **characterised in that** a batch is provided which includes iron oxide as the colour-imparting agent and titanium oxide as a seed agent.

8. Use according to claim 7, **characterised in that** selenium oxide is added as a further decolouring agent.

9. Use according to claim 7, **characterised in that** arsenic oxide is added as a further decolouring agent in contents of less than 0.2 wt%, wherein refining is preferably accomplished without antimony oxide using tin oxide and/or chlorine or sulphate compounds.

10. Use according to any one of the preceding claims, **characterised in that** a batch is used in which the weight fraction of chromium or chromium oxide is less than 0.01 %, preferably less than 0.005 %.

**Revendications**

1. Utilisation de l'oxyde de fer et/ou de l'oxyde de cérium comme agent décolorant pour ajuster la transmission de la lumière dans le domaine spectral visible d'un article en vitrocéramique d'aluminosilicate de lithium, en particulier d'une plaque vitrocéramique d'aluminosilicate de lithium, comprenant les étapes consistant à :

- mettre à disposition un mélange pour la vitrocéramique d'aluminosilicate de lithium, ledit mélange comprenant un agent colorant, en particulier un oxyde coloré, quiabsorbe la lumière dans le domaine spectral visible compris entre 450 et 750 nanomètres dans la vitrocéramique, et un mélange ayant au moins 0,005 % en poids d'oxyde de vanadium comme agent colorant étant mis à disposition,
- faire fondre le mélange et produire un précurseur de verre, et
- céramiser ledit précurseur de verre pour obtenir un article en vitrocéramique,

- l'agent décolorant étant ajouté au mélange avant ou pendant la fusion, ledit agent décolorant réduisant l'absorption de l'agent colorant dans au moins un intervalle partiel du domaine spectral visible lors de la céramisation de sorte que la transmission de l'article en vitrocéramique dans le domaine spectral visible compris entre 450 et 750 nanomètres reste globalement au moins identique, de préférence soit relevée, la proportion d'agent décolorant dans la composition de vitrocéramique étant déterminée en fonction d'une transmission de la lumière de l'article en vitrocéramique dans le domaine spectral visible lors de l'éclairage perpendiculairement à la surface de l'article en vitrocéramique, qui est fixée au préalable et supérieure à 2,5 %, et la quantité d'agent décolorant correspondant à ladite proportion étant ajoutée au mélange, au moins 0,1 % en poids d'oxyde de fer et/ou au moins 0,1 % en poids d'oxyde de cérium étant ajouté en tant qu'agent décolorant,

la teneur en oxyde de fer étant au moins égale ou supérieure à la teneur en vanadium,
les teneurs en oxyde d'étain, oxyde de titane, oxyde de fer et oxyde de cérium dans la composition de vitrocéramique répondant à la relation

$(M(SnO_2) + 0,1^* M(TiO_2)) / (M(Fe_2O_3) + M(CeO_2)) < 4$,

de préférence < 3, M désignant respectivement la proportion des composants cités entre parenthèse en pourcent en poids, et la teneur en oxyde de cérium étant au maximum de 0,6 % en poids.

2. Utilisation selon la revendication précédente, **caractérisée en ce que** la somme des proportions en poids de l'oxyde de fer et de l'oxyde de cérium dans l'article en vitrocéramique d'aluminosilicate de lithium est 5 fois à 20 fois supérieure à la proportion en poids d'oxyde de vanadium.

3. Utilisation selon l'une quelconque des revendications précédentes, dans laquelle plusieurs articles en vitrocéramique ayant des transmissions différentes sont produits l'un après l'autre en variant l'addition de l'agent décolorant.

4. Utilisation selon l'une quelconque des revendications précédentes, **caractérisée en ce que** le verre de départ pour le précurseur de verre est produit dans une cuve au cours d'un procédé de fusion en continu.

5. Utilisation selon l'une quelconque des revendications précédentes, **caractérisée en ce qu'**un mélange qui comprend les composants suivants en pourcent en poids sur la base de l'oxyde est mis à disposition pour la production de la vitrocéramique :

| | |
|---|---|
| $Li_2O$ | 3 à 5 , |
| $Al_2O_3$ | 18 à 25, |
| $SiO_2$ | 55 à 75, |

$TiO_2$ 1 à 5, une teneur en $TiO_2$ dans la plage de 1 à 2,5 % en poids étant préférée pour la vitrocéramique transparente.

6. Utilisation selon l'une quelconque des revendications précédentes, **caractérisée en ce que** l'oxyde de vanadium est utilisé comme agent colorant et l'oxyde de fer comme agent décolorant, l'oxyde de fer étant ajouté au mélange de sorte que, pour une teneur en oxyde de vanadium donnée, la courbe de transmission spectrale de la vitrocéramique dans une plage de longueurs d'ondes comprise entre 4 50 et 600 nanomètres devient linéaire pour qu'un coefficient de détermination $R^2$ supérieur à 0,9, de préférence supérieur à 0,95, soit obtenu pour une droite ajustée à la courbe de transmission de la vitrocéramique par la méthode des moindres carrés dans une plage de longueurs d'ondes de 450 à 600 nanomètres.

7. Utilisation selon la revendication 6, **caractérisée en ce qu'**un mélange contenant de l'oxyde de fer en tant qu'agent colorant et de l'oxyde de titane en tant que formateur de germe est mis à disposition.

8. Utilisation selon la revendication 7, **caractérisée en ce que** de l'oxyde de sélénium est ajouté comme autre agent décolorant.

9. Utilisation selon la revendication 7, **caractérisée en ce que** de l'oxyde d'arsenic est ajouté comme autre agent décolorant en des teneurs inférieures à 0,2 % en poids, l'affinage étant effectué de préférence avec de l'oxyde d'étain et/ou des composés chlorés et/ou sulfatés en l'absence d'oxyde d'antimoine.

10. Utilisation selon l'une quelconque des revendications précédentes, **caractérisée en ce qu'**un mélange dans lequel la proportion en poids de chrome ou d'oxyde de chrome est inférieure à 0,01 %, de préférence inférieure à 0,005 %, est utilisé.

<u>1</u>

35　　　　　　　　　33　　　31

3

d

7　　　　　32

5

Fig. 1

<u>1</u>

35　　　　　　　　33　　　31

3

d

38

7　　37　　32

5

Fig. 2

Fig. 3

EP 2 864 264 B1

Fig. 4

Fig. 5

EP 2 864 264 B1

Fig. 6

**spektraler Transmissionsgrad**

Fig. 7

Wellenlänge [nm]

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2010040443 A2

- DE 19939787 C2

**In der Beschreibung aufgeführte Nicht-Patentliteratur**

- **B. ANDRIANASOLO et al.** Ultrafine grained glass-ceramics obtained with Cr2O3-additions. *J. Non-Cryst. Solids,* 1990, vol. 126, 103-110